# EUROPÄISCHE PATENTANMELDUNG

(11) **EP 1 122 462 A2**
(43) Veröffentlichungstag der Anmeldung: **08.08.2001**
(21) Anmeldenummer: 01102283.7
(22) Anmeldetag: 01.02.2001
(51) Int. Cl.: F16H 1/16

(54) **Schneckengetriebe**

(30) Priorität: 03.02.2000 DE 20001872 U
(71) Anmelder: Ritzerfeld, Klaus, Dipl.-Ing., 50678 Köln (DE)
(72) Erfinder: Ritzerfeld, Klaus, Dipl.-Ing., 50678 Köln (DE)
(74) Vertreter: Bauer, Dirk, Dipl.-Ing. Dipl.-Kfm.

(57) **Zusammenfassung**

Ein Schneckengetriebe (1) weist eine Schnecke (S), die von einer Antriebswelle (5) antreibbar ist, und ein eine Außenverzahnung (2) aufweisendes Zahnrad (3) auf, das mit der Schnekke (S) kämmt und von dem eine Abtriebswelle (4) antreibbar ist. Der Kraftfluß zwischen der Antriebswelle (5) und der Abtriebswelle (4) ist unterbrechbar, um beispielsweise trotz der Selbsthemmung des Schneckengetriebes (1) einen Freilauf der Abtriebswelle (4) zu erreichen. Eine einfache und kostengünstige Möglichkeit zur Realisierung eines Freilaufs, ohne daß hierdurch der Bauraum des Getriebes wesentlich vergrößert wird, besteht darin, daß das Zahnrad (3) ausgehend von einer Übertragungsstellung, in der das Zahnrad (3) mit der Schnecke (S) kämmt, in axiale Richtung in eine Freilaufstellung verschiebbar ist, in der die Außenverzahnung (2) außer Eingriff mit der Schnecke (S) steht.

## Beschreibung

Die Erfindung betrifft ein Schneckengetriebe mit einer Schnecke, die von einer Antriebswelle antreibbar ist, und mit einem eine Außenverzahnung aufweisenden Zahnrad, das mit der Schnecke kämmt und von dem eine Abtriebswelle antreibbar ist, wobei der Kraftfluß zwischen der Antriebswelle und der Abtriebswelle unterbrechbar ist.

Bei derartigen, allgemein bekannten Schneckengetrieben macht man sich den Vorteil einer großen Untersetzung bei nur einer einzigen Getriebestufe zunutze. Auf diese Weise lassen sich auch mit vergleichsweise kleinen Motoren, beispielsweise Gleichstrom-Elektromotoren im Niedervoltbereich, vergleichsweise hohe Drehmomente erzeugen. Bei den üblichen Steigungen der verwendeten Schnecken liegt bei derartigen Schneckengetrieben Selbsthemmung vor, d.h. es ist nicht möglich, die Schnecke durch Drehmomenteinleitung in das Zahnrad in Rotation zu versetzen. Für viele Anwendungen ist der Effekt der Selbsthemmung gewünscht, wie beispielsweise beim Antrieb von Scheibenwischern im Fahrzeugbereich, wo derartige Schneckengetriebe weitverbreitet sind. In anderen Anwendungsbereichen ist die Selbsthemmung jedoch nicht erwünscht, was insbesondere in sicherheitstechnischen Aspekten begründet liegt. Bei derartigen Anwendungen ist es zumindest erforderlich, eine Möglichkeit zu schaffen, um die Selbsthemmung aufheben zu können, was in der Regel dadurch realisiert wird, daß der Kraftfluß zwischen der Antriebswelle und der Abtriebswelle insgesamt unterbrechbar ist.

So ist es allgemein bekannt, das Zahnrad mit Hilfe einer fest damit gekoppelten Hohlwelle zu lagern. Durch die Hohlwelle ist die eigentliche Abtriebswelle geführt, die mit einer scheibenartigen Kupplung versehen ist, die mit Federkraft gegen eine Stirnseite des Zahnrades preßbar ist. Die Kupplungsscheibe weise mehrere Bohrungen auf, die mit kurzen Stiften, die in axiale Richtung über die Stirnseite des Zahnrades vorstehen, in Eingriff zu bringen sind, wodurch ein Formschluß und somit die Möglichkeit zur Drehmomentübertragung geschaffen wird. Wird die Kupplungsscheibe um ein gewisses Maß in axiale Richtung von der zugeordneten Stirnseite des Zahnrades entfernt, so wird der Formschluß aufgehoben und der Kraftfluß unterbrochen. Das Getriebe befindet sich in einer Freilaufstellung, so daß die Abtriebswelle ohne nennenswerten Widerstand gedreht werden kann.

Eine derartige Konstruktion ist jedoch vergleichsweise aufwendig und daher teuer, weil das Zahnrad mit einer Hohlwelle versehen ist und die Kupplung samt federbelastetem Anpreßmechanismus aus einer Mehrzahl von zusätzlichen Bauteilen besteht.

Zum allgemein bekannten Stand der Technik zählt des weiteren ein Schneckengetriebe, dessen Abtriebswelle die Eingangswelle eines Planetengetriebes bildet, das vornehmlich dazu dient, einen Freilauf zu realisieren. Entweder wird der Planetenträger angetrieben, und der Abtrieb erfolgt bei arretiertem Sonnenrad über das Hohlrad. Wird in diesem Fall die Sonnenradarretierung aufgehoben, so kann das Hohlrad gedreht werden, wobei die Freilaufeigenschaft dadurch erzielt wird, daß bei feststehendem Planetenträger, jedoch rotierenden Planetenrädern die Drehbewegung auf das frei drehbare Sonnenrad übertragen wird.

Im alternativen Fall erfolgt der Antrieb des Planetenrades über das Sonnenrad und der Abtrieb bei arretiertem Hohlrad über den Planetenträger. Wird die Hohlradarretierung aufgehoben, so läßt sich die Abtriebswelle und damit der Planetenträger um das stillstehende Sonnenrad rotieren, wobei gleichzeitig eine Rotation des Hohlrades, das nunmehr freigegeben ist, auftritt.

Eine derartige Konstruktion ist jedoch in zweierlei Hinsicht als nachteilig anzusehen: Zum einen sind die Kosten aufgrund des zusätzlichen Planetengetriebes sehr hoch, und zum anderen wird der benötigte Bauraum wesentlich vergrößert.

Der Erfindung liegt die Aufgabe zugrunde, bei einem Schneckengetriebe auf einfache und kostengünstige Weise einen Freilauf zu realisieren, ohne daß hierdurch der Bauraum des Getriebes wesentlich vergrößert wird.

Ausgehend von einem Schneckengetriebe der eingangs beschriebenen Art, wird diese Aufgabe erfindungsgemäß dadurch gelöst, daß das Zahnrad, ausgehend von einer Übertragungsstellung, in der das Zahnrad mit der Schnecke kämmt, in axiale Richtung in eine Freilaufstellung verschiebbar ist, in der die Außenverzahnung außer Eingriff mit der Schnecke steht.

Gemäß der Erfindung wird der Kraftschluß durch eine einfache Axialverschiebung an der Stelle aufgehoben, wo im Übertragungszustand die Kraftübertragung zwischen den relativ zueinander bewegten Bauteilen erfolgt. Ein zusätzliches Bauteil zur Realisierung der Freilauffunktion, wie beispielsweise eine Kupplung oder ein zusätzliches Planetengetriebe, ist nicht erforderlich, so daß der Bauaufwand und damit auch die Kosten für das Getriebe gemäß der Erfindung besonders niedrig sind. Auch ist die Verschleißanfälligkeit aufgrund der kleinen Anzahl der Bauteile sehr gering.

Trotz der Schrägverzahnung des Zahnrades, die der Steigung der Schnecke angepaßt ist, ist eine einfache Axialverschiebung des Zahnrades zur Aufhebung bzw. Herstellung des Eingriffs zwischen Schnecke und Zahnrad möglich, da das Zahnrad während der Herausbewegung aus den Schneckenwendeln leicht entsprechend der Steigung der Schnecke verdreht wird, um schließlich bei einer hinreichenden Entfernung von einer senkrecht zur Zahnradachse verlaufenden Symmetrieebene durch die Schnecke vollständig den Kontakt zu den gekrümmten Schneckenwendeln zu verlieren. Selbst wenn der mit dem Zahnrad verbundene Abtriebsstrang nicht frei rotierbar ist, reicht die Eigenelastizität der Bauteile sowie ein meist vorhandenes Spiel bei weiteren Zahnradpaarungen des Abtriebs aus, um die erforderliche Verdrehung des Zahnrades bei dessen Axialverschiebung zu gestatten. Die Verdrehung ist bei den üblichen Steigungswinkeln der Schnecke, die zur Erzielung hoher Übersetzungen gewählt werden, ohnehin extrem klein.

Um die Einspurbewegung des Zahnrades bei der Wiederherstellung des Eingriffs zwischen Schnecke und Zahnrad zu verbessern, wird vorgeschlagen, daß die Zähne des Zahnrades in einem Randbereich in axiale Richtung zu einer Stirnfläche des Zahnrades hin, die in der Freilaufstellung der Schnecke zugewandt ist, in ihrer Breite kontinuierlich abnehmen. So kann beispielsweise mit Hilfe (in der Draufsicht) rampenförmig angeschrägter Zähne verhindert werden, daß unglücklicherweise ein Zahnkopf an einer Schneckenwendel verklemmt.

Je nach der gewählten Konstruktion kann es sinnvoll sein, das Zahnrad zusammen mit der Abtriebswelle axial zu verschieben. Auch kann die Abtriebswelle sich durch das Zahnrad hindurch erstrecken, wobei ein Wellenende lediglich zur Krafteinleitung bei der Verschiebung vorgesehen sein kann.

Ein einfaches und wirtschaftlich zu realisierendes Verstellprinzip besteht darin, daß das Zahnrad mit Hilfe eines Elektromagneten verschiebbar ist.

Um nur in eine Verstellrichtung aktiv eine Kraft aufbringen zu müssen, wird vorgeschlagen, daß das Zahnrad mit Hilfe einer Feder in eine Stellung vorgespannt ist und die Verschiebung in die andere Stellung entgegen der Federkraft erfolgt.

Insbesondere wenn sicherheitstechnische Aspekte zu beachten sind, kann es vorteilhaft sein, daß das Zahnrad in die Freilaufstellung vorgespannt ist. Auch im Falle eines Ausfalls der Betätigungsenergie kann auf diese Weise sicher die Freilaufstellung erreicht werden.

Die Erfindung weiter ausgestaltend, ist schließlich noch vorgesehen, daß das Zahnrad über eine biegsame Welle oder einen Bowdenzug mit einer Antriebseinrichtung für die Axialverschiebung verbunden ist. Eine derartige Ausgestaltung empfiehlt sich insbesondere, wenn die Platzverhältnisse eine unmittelbare Anordnung der Antriebseinrichtung in der Nähe des Zahnrades bzw. in Achsrichtung damit fluchtend nicht erlauben bzw. ratsam erscheinen lassen. Die Biegsamkeit der Welle bzw. des Baudenzugs ermöglicht es, die für die Axialverschiebung erforderliche Bewegung um einen nahezu beliebigen Winkel im Raum umzulenken.

Die Erfindung wird nachstehend anhand zweier Ausführungsbeispiele eines Schneckengetriebes, die in der Zeichnung dargestellt sind, näher erläutert. Es zeigt jeweils in schematischer Darstellung:
- Fig. 1: ein Schneckengetriebe in der Übertragungssstellung;
- Fig. 2: wie Fig. 1, jedoch in der Freilaufstellung;
- Fig. 3: eine um 90° gedrehte Ansicht eines Schneckengetriebes;
- Fig. 4 und Fig. 4a: ausschnittsweise Ansichten eines Zahnrades mit angeschrägten Zähnen und
- Fig. 5: das Getriebe gemäß Fig. 1, jedoch mit einer elektromagnetischen Betätigung der Axialverschiebung des Zahnrades.

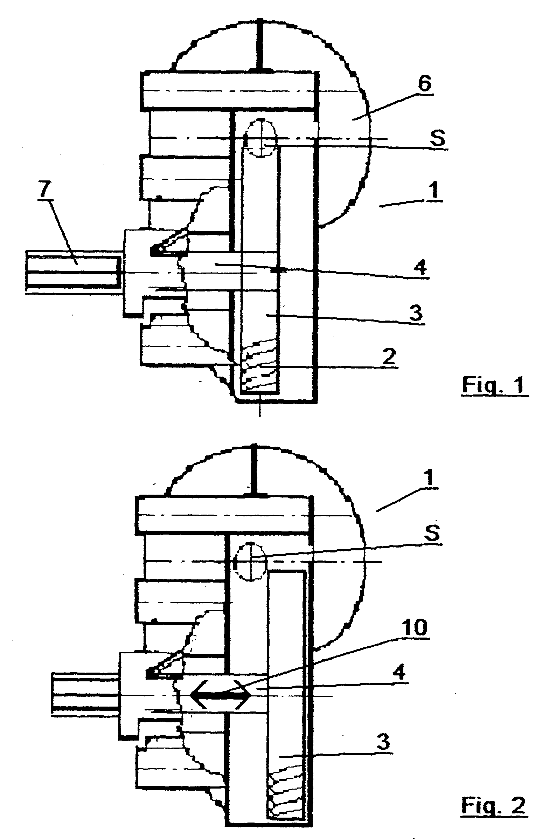

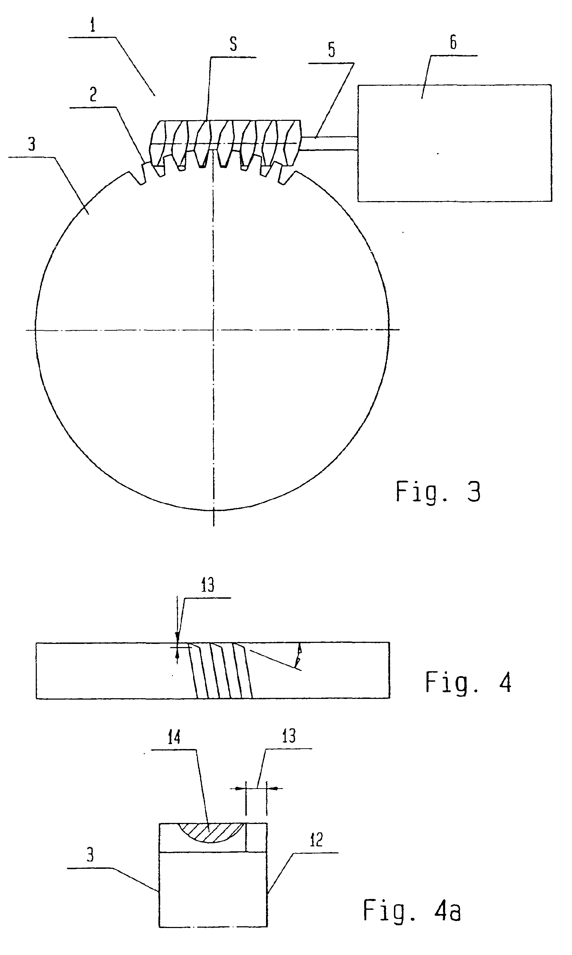

Die Fig. 1 und 3 verdeutlichen, daß ein insgesamt mit 1 bezeichnetes Schneckengetriebe aus einem mit einer Außenverzahnung 2 versehenen Zahnrad 3 sowie einer Schnecke S besteht, die von einer Antriebswelle 5 antreibbar ist, bei der es sich um die Welle eines Gleichstrom-Elektromotors 6 handelt. In eine zentrische Bohrung des Zahnrads 3 ist eine Abtriebswelle 4 eingepreßt, die an der dem Zahnrad 3 gegenüberliegenden Stirnseite mit einem Sechskant 7 versehen ist.

Die Fig. 1 und 3 zeigen das Schneckengetriebe 1 in der Übertragungsstellung, in der die Schnecke S mit der Verzahnung 2 des Zahnrades 3 in Eingriff steht. Infolge einer Rotation der Schnecke S kommt es zu einer Drehbewegung des Zahnrades 3 sowie der Abtriebswelle 4. Im vorliegenden Fall wird die Drehbewegung der Abtriebswelle 4 auf ein auf den Sechskant 7 formschlüssig aufgeschobenes Zahnrad 8 übertragen, das in einem Gehäuse 9 gekapselt ist. Mit Hilfe des Zahnrades 8 wird ein Mechanismus zum Schließen bzw. Öffnen einer Schiebetür eines Lieferwagens angetrieben.

Die bei dem Schneckengetriebe 1 in der Übertragungsstellung vorliegende Selbsthemmung ist unerwünscht, da sie im Falle eines Ausfalls der elektrischen Energieversorgung bzw. eines Defekts des Elektromotors 6 dazu führen würde, daß die Schiebetür auch manuell nicht zu öffnen bzw. schließen ist.

Um die Selbsthemmung auszuschalten, ist das Zahnrad 3 einschließlich der darin eingepreßten Abtriebswelle 4 in axiale Richtung (vgl. Doppelpfeil 10) verschiebbar. Fig. 2 zeigt das Schneckengetriebe 1 in der Freilaufstellung, in der die Schnecke S und das Zahnrad 3 relativ zueinander so weit in axiale Richtung des Zahnrades 3 verschoben sind, daß die Verzahnung des Zahnrades 3 sich außer Eingriff mit der Wendel der Schnecke S befindet und somit der Kraftschluß aufgehoben ist. Abtriebsseitig kann nun eine Öffnungs- und Schließbewegung der Tür stattfinden, da sich das Zahnrad 4 ungehindert drehen kann.

Fig. 4 zeigt die Ansicht eines Zahns 11 des Zahnrades 3, der an einer Stirnseite 12, die in der Freilaufstellung der Schnecke S zugewandt ist, in einem Randbereich 13 rampenförmig angeschrägt ist, um bei der Überführung von der Freilauf- in die Übertragungsstellung ein zuverlässiges und ungehindertes Wiederherstellen des Eingriffs zu gewährleisten. Durch diese an sämtlichen Zähnen 11 des Zahnrades 3 vorhandene Abschrägung wird das Tragverhalten und damit auch die Verschleißfestigkeit der Wälzpaarung nicht negativ beeinträchtigt, da die Abschrägung einen in Fig. 4a schraffiert dargestellten Kontaktbereich 14 zwischen Schnecke S und Zahn 11 nicht berührt.

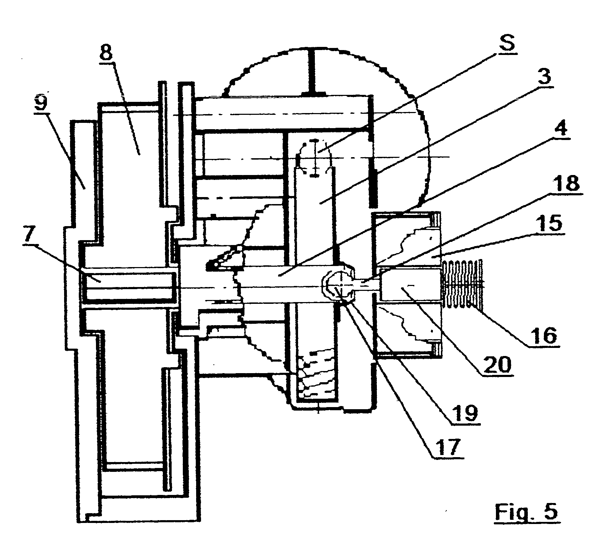

Fig. 5 zeigt schließlich noch, daß die Axialverschiebung der Abtriebswelle 4 und damit des Zahnrades 3 mit Hilfe eines Elektromagneten 15 sowie einer Feder 16 erfolgt. Die Abtriebswelle 4 ist auf der dem Zahnrad 8 abgewandten Stirnseite mit einer topfförmigen Vertiefung versehen, in die ein Kugelkopf 17 einer Betätigungsstange 18 eingreift. Der Kugelkopf 17 der Betätigungsstange 18 ist mit Hilfe eines an dem Zahnrad 3 befestigten Deckels 19 gesichert und erlaubt somit eine Kraftübertragung von der Betätigungsstange 18 auf die Abtriebswelle 4.

Die Betätigungsstange 18 ist mit einem Anker 20 des Elektromagneten 15 versehen, der sich über die Feder 16 an einem nicht näher dargestellten, gehäusefesten Bauteil abstützt.

In der in Fig. 5 dargestellten Übertragungsstellung ist der Elektromagnet 15 stromdurchflossen, weshalb er die Feder 16, den Anker 20 und damit auch die Betätigungsstange 18 sowie die Abtriebswelle 4 mit dem Zahnrad 3 in eine linke Anschlagstellung rückt. Zahnrad 3 und Schnecke S befinden sich somit im Eingriff. Die Feder 16 wird dabei mit Hilfe eines mit dem Anker 20 verbundenen und den äußeren Abschluß der Anordnung bildenden Teller T komprimiert.

Ausgehend von der Übertragungsstellung, wird das Zahnrad 3 durch Abschaltung des Elektromagneten 15 aufgrund der Kraft der Feder 16 nach rechts, d.h. in die Freilaufstellung gezogen, in der Zahnrad 3 und Schnecke S außer Eingriff sind.

Aufgrund des Kugelkopfs 17 und der topfförmigen Aufnahme desselben sowie einer hinreichend großen Durchführung der Betätigungsstange 18 durch den Deckel 19 führt die Betätigungsstange und somit auch der Anker 20 des Elektromagneten 15 nicht die Drehbewegung der Abtriebswelle 4 und des Zahnrades 3 aus.

Sofern die Platzverhältnisse die in Fig. 5 gezeigte Anordnung des Elektromagneten 15 und der Feder 16 nicht erlauben, ist mit Hilfe eines Bowdenzuges anstelle der Betätigungsstange 18 auch eine beliebige Umlenkung und somit eine andere Positionierung des Elektromagneten 15 einschließlich der Feder 16 möglich.

## Patentansprüche

1. Schneckengetriebe (1) mit einer Schnecke (S), die von einer Antriebswelle (5) antreibbar ist, und mit einem eine Außenverzahnung (2) aufweisenden Zahnrad (3), das mit der Schnecke (S) kämmt und von dem eine Abtriebswelle (4) antreibbar ist, wobei der Kraftfluß zwischen der Antriebswelle (5) und der Abtriebswelle (4) unterbrechbar ist, dadurch gekennzeichnet, daß das Zahnrad (3), ausgehend von einer Übertragungsstellung, in der das Zahnrad (3) mit der Schnecke (S) kämmt, in axiale Richtung in eine Freilaufstellung verschiebbar ist, in der die Außenverzahnung (2) außer Eingriff mit der Schnecke (S) steht.

2. Schneckengetriebe nach Anspruch 1, dadurch gekennzeichnet, daß die Zähne des Zahnrades (3) in einem Randbereich (13) in axiale Richtung zu einer Stirnseite (12) des Zahnrades (3) hin, die in der Freilaufstellung der Schnecke (S) zugewandt ist, in ihrer Breite kontinuierlich abnehmen.

3. Schneckengetriebe nach Anspruch 1 oder 2, dadurch gekennzeichnet, daß das Zahnrad (3) zusammen mit der Abtriebswelle (4) axial verschiebbar ist.

4. Schneckengetriebe nach einem der Ansprüche 1 bis 3, dadurch gekennzeichnet, daß das Zahnrad (3) mit Hilfe eines Elektromagneten (15) verschiebbar ist.

5. Schneckengetriebe nach einem der Ansprüche 1 bis 4, dadurch gekennzeichnet, daß das Zahnrad (3) mit Hilfe einer Feder (16) in eine Stellung vorgespannt ist.

6. Schneckengetriebe nach Anspruch 5, dadurch gekennzeichnet, daß das Zahnrad (3) in die Freilaufstellung vorgespannt ist.

7. Schneckengetriebe nach einem der Ansprüche 1 bis 6, dadurch gekennzeichnet, daß das Zahnrad (3) über eine biegsame Welle oder einen Baudenzug mit einer Antriebseinrichtung für die Axialverschiebung verbunden ist.
